# EUROPEAN PATENT APPLICATION

(11) **EP 4 485 996 A1**
(43) Date of publication of application: **01.01.2025**
(21) Application number: 23777925.1
(22) Date of filing: 21.03.2023
(51) Int. Cl.: H04W 28/02, H04W 76/10

(54) **COMMUNICATION METHOD AND APPARATUS**

(30) Priority: 28.03.2022 CN 202210311737
(71) Applicant: Huawei Technologies Co., Ltd., Shenzhen, Guangdong 518129 (CN)
(72) Inventor: GAO, Guojuan, Shenzhen, Guangdong 518129 (CN); ZHOU, Han, Shenzhen, Guangdong 518129 (CN); WEI, Xinpeng, Shenzhen, Guangdong 518129 (CN)
(74) Representative: Goddar, Heinz J.
(86) International application number: PCT/CN2023/082830
(87) International publication number: WO 2023/185552

(57) **Abstract**

Embodiments of this application provide a communication method. The method includes: An access network device performs congestion detection on a first data flow. The access network device sends a first data packet to a user plane function UPF network element based on a congestion detection result, where a tunneling protocol-user plane GTP-U header of the first data packet includes congestion information, or the access network device sends a second data packet to user equipment UE based on a congestion detection result, where a service data adaptation protocol SDAP layer of the second data packet includes congestion information, and the congestion information is used by a server to adjust a rate of sending the first data flow. Congestion detection and control can be provided for implementing a media streaming service, to ensure normal running during network transmission.

## Description

This application claims priority to Chinese Patent Application No. 202210311737.X, filed with the China National Intellectual Property Administration on March 28, 2022 and entitled "COMMUNICATION METHOD AND APPARATUS", which is incorporated herein by reference in its entirety.

### TECHNICAL FIELD

Embodiments of this application relate to the communication field, and more specifically, to a communication method and apparatus.

### BACKGROUND

In a communication system, for example, a 5^{th} generation (5^{th} Generation, 5G) mobile communication system, a real-time media streaming service has a high requirement on a low delay and a high bandwidth. However, effective congestion control cannot be provided when transmission is performed via an existing protocol, and normal running of a network is affected when media stream transmission consumes a large quantity of network resources.

How to provide effective congestion detection and control to ensure normal running during network transmission becomes a problem to be urgently resolved in the industry.

### SUMMARY

Embodiments of this application provide a communication method and apparatus, to provide congestion detection and control for implementing a media streaming service, thereby ensuring normal running during network transmission.

According to a first aspect, a communication method is provided. The method includes: An access network device performs congestion detection on a first data flow. The access network device sends a first data packet to a user plane function based on a congestion detection result, where a tunneling protocol-user plane GTP-U header of the first data packet includes congestion information, or the access network device sends a first data packet to user equipment UE based on a congestion detection result, where a service data adaptation protocol SDAP layer of the first data packet includes congestion information, and the congestion information is used by a server to adjust a rate of sending the first data flow.

In this application, the method may be performed by the access network device, or may be performed by a component of the access network device, for example, a processor or a chip. In this application, the congestion information includes information about a data transmission status determined after a network device performs congestion detection on a data flow, where the information is, for example, a queue delay value, a quantity of lost packets or a packet loss rate, a buffer size or buffer proportion information, a reporting periodicity, a congestion level, and a rate reduction proportion. The congestion information may alternatively be information indicating a data transmission status, or may be related information indicating whether congestion occurs or a congestion level. This is not limited in embodiments of this application.

Based on the foregoing technical solution, in this application, the access network device performs congestion detection on a data packet, to sense a congestion status on a network side. This avoids a problem that an algorithm is inaccurate because network congestion is detected and determined only on a device side and a server side. In addition, the access network device sends the congestion information to the UPF via the GTP-U header of the data packet based on the congestion detection result, or sends the congestion information to the UE via the SDAP layer, so that the congestion information can be flexibly and quickly fed back to a server end via the UPF or the UE. Therefore, congestion detection and control can be provided for a media streaming service, and normal running during network transmission can be ensured.

In this application, a user function may be a UPF network element.

In a possible implementation, the access network device receives a data flow identifier of the first data flow.

In a possible implementation, the access network device performs congestion detection on the first data flow based on the data flow identifier.

In a possible implementation, the access network device may further receive a congestion identifier.

In this application, the congestion identifier may be understood as being used by the access network device to extend a detected data packet by congestion information after the access network device performs congestion detection on the data flow, or may be understood as indicating to perform congestion detection.

In a possible implementation, the access network device performs congestion detection on the first data flow based on the data flow identifier and/or the congestion identifier.

Based on the foregoing technical solution, the access network device may determine, based on the congestion identifier or the data flow identifier, to perform congestion detection on the data flow, and feed back the congestion detection result to the server. Therefore, a data flow on which congestion detection needs to be performed can be flexibly determined, and it can be ensured that the congestion information is fed back to the server end under an indication of the congestion identifier, to ensure that the server can provide congestion detection and control for the media streaming service, and ensure the normal running during the network transmission.

In a possible design, the congestion information includes first congestion information and second congestion information, the first congestion information is congestion information between the access network device and the user plane function, and the second congestion information is congestion information between the access network device and the UE.

Based on the foregoing technical solution, the congestion information sent by the access network device includes the congestion information between the access network device and the user plane function and air interface congestion information, so that the server adjusts the sending rate of the data packet in a targeted manner.

In a possible implementation, the access network device determines that the congestion detection result meets a first condition; and the access network device sends the second data packet to the user plane function or the UE.

In this application, the first condition may include specific parameter information corresponding to the congestion detection result.

For example, the access network device determines the congestion level based on the congestion detection result, and a feedback condition is a congestion level #1. In this case, the access network device may determine whether the congestion level in the detection result meets the congestion level #1. If the congestion level meets the congestion level #1, the access network device sends the data packet to the UPF or the UE. If the congestion level does not meet the congestion level #1, the access network device does not send the data packet, or forbids or stops sending the data packet.

Based on the foregoing technical solution, the access network device sends the congestion information to the server only when determining that the detection result meets a specific condition, so that the server directly determines a specific to-be-adjusted parameter based on the congestion information, thereby improving adjustment efficiency.

In a possible implementation, the access network device receives the first data packet from the user plane function, where the first data packet includes the data flow identifier; or the access network device receives congestion detection information from an SMF network element, where the congestion detection information includes the data flow identifier.

Based on the foregoing technical solution, the access network device may flexibly obtain the data flow identifier.

In a possible implementation, the first data flow is a quality of service QoS flow that is in a protocol data unit session and that is bound to a congestion detection policy and charging control PCC rule.

In a possible implementation, the first data packet or the second data packet is a data packet that transmits data and that is of the data flow, or the first data packet or the second data packet is a monitoring data packet generated by the access network device or the user plane function network element.

In a possible implementation, the congestion detection information includes at least one of a queue delay, congestion reporting time, a packet loss rate, a buffer size, a periodicity, a congestion level, and a rate reduction proportion.

In this application, a data packet on which the access network device performs congestion detection may be a downlink data packet used to transmit data of the data flow, or may be a data packet used for congestion detection or a dummy packet (where the data packet or the empty packet may not carry data of the data flow). This is not limited in embodiments of this application.

Based on the foregoing technical solution, the access network device may perform congestion detection on any data packet, and does not need to wait for a data packet of a transmission service to perform congestion detection, so that a congestion status can be fed back to the server in a timely manner.

In a possible implementation, the congestion information includes at least one of a queue delay proportion and a threshold delay proportion, a packet loss proportion, a buffer size proportion, a congestion level, and a rate reduction proportion.

In a possible implementation, the first data packet is the same as the second data packet, or the first data packet is different from the second data packet.

According to a second aspect, a communication method is provided. The method includes: A user plane function receives a first data packet from an access network device, where a tunneling protocol-user plane GTP-U header of the first data packet includes first congestion information. The user plane function sends second congestion information to a server based on the first congestion information, where the second congestion information is used by the server to adjust a rate of sending a first data flow. The first congestion information is congestion information of the first data flow.

In this application, the method may be performed by the user plane function, or may be performed by a component of the user plane function, for example, a processor or a chip.

Based on the foregoing technical solution, the user plane function sends congestion information to the server via an uplink data packet or a downlink data packet. The congestion information is used by the server to adjust the rate of sending the data flow, so that the congestion information can be flexibly and quickly sent to a server end via the uplink or downlink data packet, and congestion detection and control can be provided for implementing a media streaming service, thereby ensuring normal running during network transmission.

In this application, a GTP-U header of a data packet received by the user plane function from the access network device includes the congestion information. Protocol stacks of the access network device and the user plane function include a GTP-U layer, and the access network device and the user plane function may perform transmission of the data packet via the protocol stacks. However, an uplink transmission protocol stack of the user plane function does not include a GTP-U layer. Therefore, after receiving the first data packet from the access network device and obtaining the congestion information from the GTP-U header, the user plane function may mark a data packet, and then send the data packet to the server.

In a possible implementation, the user plane function sends a second data packet to the server, where the second data packet includes the second congestion information.

Based on this technical solution, the user plane function sends the second congestion information to the server via the second data packet.

In a possible implementation, the user plane function sends the second congestion information to the server via user equipment UE.

The UPF may transmit the congestion information via a downlink data packet, and implementation of a feedback mechanism is more flexible.

In a possible implementation, the user plane function sends a downlink data packet to the UE, where the downlink data packet includes the second congestion information.

For beneficial effects of the technical solution, refer to the foregoing solution. Details are not described herein again.

In a possible implementation, the user plane function sends the second congestion information to the server via a session management function or a network exposure function.

In a possible implementation, the user plane function determines that a congestion detection result meets a first condition, or the first congestion information meets a first condition. The user plane function sends the second congestion information to the server.

Based on the foregoing technical solution, the user plane function sends the congestion information to the server only when determining that the detection result or the first congestion information meets a specific condition, so that the server directly determines a specific to-be-adjusted parameter based on the second congestion information, thereby improving adjustment efficiency.

In a possible implementation, the first data packet is a data packet that transmits data and that is of the data flow or a monitoring data packet generated by the access network device or the user plane function.

Based on the foregoing technical solution, the access network device may perform congestion detection on any data packet, and does not need to wait for a data packet of a transmission service to perform congestion detection, so that a congestion status can be fed back to the server in a timely manner.

In a possible implementation, the congestion information includes at least one of a queue delay proportion and a threshold delay proportion, a packet loss proportion, a buffer size proportion, a congestion level, and a rate reduction proportion.

In a possible implementation, the first data packet is the same as the second data packet, or the first data packet is different from the second data packet.

According to a third aspect, a communication method is provided. The method includes: A terminal device UE receives a first data packet, where a GTP-U header of the first data packet includes first congestion information, or a SDAP layer of the first data packet includes first congestion information, where the first congestion information is used by a server to adjust a rate of sending a data flow. The UE sends second congestion information to the server based on the first congestion information.

In this application, the method may be performed by the terminal device, or may be performed by a component of the terminal device, for example, a processor or a chip.

Based on the foregoing technical solution, in this application, a data packet received by the terminal device from an access network device includes congestion information in a GTP-U header or an SDAP layer, and further sends the congestion information to the server, to notify the server of a congestion status that is on a network side and that is sensed by the access network device. This avoids a problem that an algorithm is inaccurate because network congestion is detected and determined only on a device side and a server side, and the server is enabled to adjust rate for sending the data based on the congestion status, to ensure normal running during network transmission.

In a possible implementation, the UE receives the first data packet from a user plane function, where a GTP-U header of the first data packet includes the first congestion information.

In this solution, the UE receives, from the user plane function, the data packet that includes the first congestion information in the GTP-U header, and further sends the congestion information to the server.

In a possible implementation, the UE receives the first data packet from the access network device, where the SDAP layer of the first data packet includes the first congestion information.

In this solution, the UE receives, from the access network device, the data packet that includes the first congestion information at the SDAP layer, and further sends the congestion information to the server.

In a possible implementation, the UE sends the second congestion information to the server via a modem.

According to a fourth aspect, a communication apparatus is provided. The apparatus includes: a processing unit, configured to perform congestion detection on a first data flow; and a transceiver unit, configured to send a first data packet to a user plane function based on a congestion detection result, where a tunneling protocol-user plane GTP-U header of the first data packet includes congestion information, or further configured to send a first data packet to user equipment UE based on a congestion detection result, where a service data adaptation protocol SDAP layer of the first data packet includes congestion information, and the congestion information is used by a server to adjust a rate for sending the first data flow.

Based on the foregoing technical solution, in this application, the processing unit performs congestion detection on a data packet, to sense a congestion status on a network side. This avoids a problem that an algorithm is inaccurate because network congestion is detected and determined only on a device side and a server side. In addition, the transceiver unit sends the congestion information to the UPF via the GTP-U header of the data packet based on the congestion detection result, or sends the congestion information to the UE via the SDAP layer, so that the congestion information can be flexibly and quickly fed back to a server end via the user plane function or the UE. Therefore, congestion detection and control can be provided for implementing a media streaming service, thereby ensuring normal running during network transmission.

In a possible implementation, the transceiver unit is further configured to receive a data flow identifier of the first data flow.

In a possible implementation, an access network device performs congestion detection on the first data flow based on the data flow identifier.

In a possible implementation, the access network device receives a congestion identifier.

In a possible implementation, the access network device performs congestion detection on the first data flow based on the data flow identifier and/or the congestion identifier.

Based on the foregoing technical solution, the processing unit may determine, based on the congestion identifier or the data flow identifier, to perform congestion detection on the data flow, and feed back the congestion detection result to the server. Therefore, a data flow on which congestion detection needs to be performed can be flexibly determined, and it can be ensured that the congestion information is fed back to the server end under an indication of the congestion identifier, to ensure that the server can provide congestion detection and control for the media streaming service, and ensure the normal running during the network transmission.

In a possible design, the congestion information includes first congestion information and second congestion information, the first congestion information is congestion information between the access network device and the user plane function, and the second congestion information is congestion information between the UE and the access network device.

Based on the foregoing technical solution, congestion information sent by the transceiver unit includes the congestion information between the access network device and the user plane function and air interface congestion information, so that the server adjusts the rate for sending the data packet in a targeted manner.

In a possible implementation, the processing unit is further configured to determine that the congestion detection result meets a first condition; and the transceiver unit sends the first data packet to the user plane function or the UE.

Based on the foregoing technical solution, the transceiver unit sends the congestion information to the server only when the processing unit determines that the detection result meets a specific condition, so that the server directly determines a specific adjusted parameter based on the congestion information, thereby improving adjustment efficiency.

In a possible implementation, the transceiver unit is specifically configured to receive the first data packet from the user plane function, where the first data packet includes the data flow identifier; or the transceiver unit receives congestion detection information from an SMF network element, where the congestion detection information includes the data flow identifier.

Based on the foregoing technical solution, the transceiver unit may flexibly obtain the data flow identifier.

In a possible implementation, the first data packet is a data packet that transmits data and that is of the data flow or a monitoring data packet generated by the access network device or the user plane function.

Based on the foregoing technical solution, the processing unit may perform congestion detection on any data packet, and does not need to wait for a data packet of a transmission service to perform congestion detection, so that a congestion status can be fed back to a server in a timely manner.

In a possible implementation, the congestion detection information includes at least one of a queue delay, congestion reporting time, a packet loss rate, a buffer size, a periodicity, a congestion level, and a rate reduction proportion.

In a possible implementation, the first data flow is a data flow that is in a congestion detection policy and charging control PCC rule and that is bound to a quality of service QoS flow.

In a possible implementation, the congestion information includes at least one of a queue delay proportion and a threshold delay proportion, a packet loss proportion, a buffer size proportion, a congestion level, and a rate reduction proportion.

In a possible implementation, the first data packet is the same as the second data packet, or the first data packet is different from the second data packet.

According to a fifth aspect, a communication apparatus is provided. The method includes: A transceiver unit is configured to receive a first data packet from an access network device, where a tunneling protocol-user plane GTP-U header of the first data packet includes first congestion information; and the transceiver unit is further configured to send second congestion information to a server based on the first congestion information, where the second congestion information is used by the server to adjust a rate for sending a data flow.

Based on the foregoing technical solution, the transceiver unit sends congestion information to the server via an uplink or downlink data packet. The congestion information is used by the server to adjust the rate for sending the data flow, so that congestion detection and control can be provided for implementing a media streaming service, thereby ensuring normal running during network transmission.

In a possible implementation, the apparatus includes a processing unit, and the processing unit is configured to carry the second congestion information in the first data packet before the transceiver unit sends the second congestion information to the server. The first data packet is an uplink data packet or a downlink data packet.

For beneficial effects of the solution, refer to the foregoing solution. Details are not described herein again.

In a possible implementation, the transceiver unit is configured to send the second congestion information to the server via user equipment UE.

Based on the foregoing technical solution, the transceiver unit may transmit the congestion information via the uplink data packet and the downlink data packet, and implementation of a feedback mechanism is more flexible.

In a possible implementation, the transceiver unit is specifically configured to send a downlink data packet to the UE, where the downlink data packet includes the second congestion information.

In a possible implementation, the transceiver unit is specifically configured to send the second congestion information to the server via a session management function or a network exposure function.

In a possible implementation, the processing unit is further configured to determine that a congestion detection result or the first congestion information meets a first condition; and the transceiver unit sends the congestion information to the server.

Based on the foregoing technical solution, the processing unit sends the congestion information to the server only when determining that the detection result meets a specific condition, so that the server directly determines a specific adjusted parameter based on the congestion information, thereby improving adjustment efficiency.

In a possible implementation, the first data packet is a data packet of the data flow or a monitoring data packet generated by the access network device or the user plane function.

Based on the foregoing technical solution, the processing unit may perform congestion detection on any data packet, and does not need to wait for a data packet of a transmission service to perform congestion detection, so that a congestion status can be fed back to a server in a timely manner.

In a possible implementation, the congestion information includes at least one of a queue delay proportion and a threshold delay proportion, a packet loss proportion, a buffer size proportion, a congestion level, and a rate reduction proportion.

According to a sixth aspect, a communication apparatus is provided. The apparatus includes: A transceiver unit is configured to receive a first data packet, where a GTP-U header of the first data packet includes first congestion information, or a SDAP layer of the first data packet includes first congestion information, where the first congestion information is used by a server to adjust a rate for sending a first data flow; and the transceiver unit is further configured to send second congestion information to the server based on the first congestion information.

In this application, the method may be performed by the terminal device, or may be performed by a component of the terminal device, for example, a processor or a chip.

Based on the foregoing technical solution, in this application, a data packet received by the transceiver unit includes congestion information in a GTP-U header or an SDAP layer, and further sends the congestion information to the server, to notify the server of a congestion status on a network side that is sensed by the access network device. This avoids a problem that an algorithm is inaccurate because network congestion is detected and determined only on a device side and a server side, and the server is enabled to adjust a rate for sending the data based on the congestion status, to ensure normal running during network transmission.

In a possible implementation, the transceiver unit is specifically configured to receive the first data packet from a user plane function, where a GTP-U header of the first data packet includes the first congestion information.

In this solution, the transceiver unit specifically receives, from the user plane function, the data packet includes the first congestion information in the GTP-U header, and further sends the congestion information to the server.

In a possible implementation, the transceiver unit is specifically configured to receive the first data packet from the access network device, where an SDAP layer of the first data packet includes the first congestion information.

In this solution, the transceiver unit is specifically configured to receive, from the access network device, a data packet that includes the first congestion information at the SDAP layer, and further sends the congestion information to the server.

In a possible implementation, the transceiver unit is further configured to send the second congestion information to the server via a modem.

According to a seventh aspect, a communication apparatus is provided, and includes a processor. The processor is coupled to a memory, and may be configured to execute instructions in the memory, to implement the method in the first aspect. Optionally, the apparatus further includes the memory. Optionally, the apparatus further includes a communication interface, and the processor is coupled to the communication interface.

According to an eighth aspect, a communication apparatus is provided, and includes a processor. The processor is coupled to a memory, and may be configured to execute instructions in the memory, to implement the method in the second aspect. Optionally, the apparatus further includes the memory. Optionally, the apparatus further includes a communication interface, and the processor is coupled to the communication interface.

According to a ninth aspect, a communication apparatus is provided, and includes a processor. The processor is coupled to a memory, and may be configured to execute instructions in the memory, to implement the method in the third aspect. Optionally, the apparatus further includes the memory. Optionally, the apparatus further includes a communication interface, and the processor is coupled to the communication interface.

According to a tenth aspect, a computer program product is provided. The computer program product includes a computer program (which may also be referred to as code or instructions). When the computer program runs, a computer is enabled to perform the method according to any one of the possible implementations of the first aspect, the second aspect, or the third aspect.

According to an eleventh aspect, a computer-readable storage medium is provided. The computer-readable medium stores a computer program (which may also be referred to as code or instructions). When the computer program is run on a computer, the computer is enabled to perform the method in any one of the possible implementations of the first aspect, the second aspect, or the third aspect.

According to a twelfth aspect, a chip system is provided, including a processor, configured to invoke a computer program from a memory and run the computer program, so that a device in which the chip system is installed performs the method in the implementations of the first aspect, the second aspect, and the third aspect.

According to a thirteenth aspect, a communication system is provided. The communication system includes the apparatus according to the fourth aspect or the seventh aspect, and the apparatus according to the fifth aspect or the eighth aspect.

### BRIEF DESCRIPTION OF DRAWINGS

FIG. 1 is a schematic diagram of a communication system architecture 100 applicable to an embodiment of this application;
FIG. 2 is a schematic block diagram of a communication method applicable to an embodiment of this application;
FIG. 3 is a schematic interaction diagram of a communication method applicable to an embodiment of this application;
FIG. 4A and FIG. 4B are another schematic interaction diagram of a communication method applicable to an embodiment of this application;
FIG. 5 is another schematic interaction diagram of a communication method applicable to an embodiment of this application;
FIG. 6 is a schematic block diagram of a communication apparatus applicable to an embodiment of this application; and
FIG. 7 is a schematic diagram of an architecture of a communication apparatus applicable to an embodiment of this application.

### DESCRIPTION OF EMBODIMENTS

The following describes technical solutions of embodiments in this application with reference to accompanying drawings.

The technical solutions in embodiments of this application may be applied to various communication systems, such as a global system of mobile communication (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, and a 5^{th} generation (5^{th} Generation, 5G) system, new radio (New Radio, NR), or a future evolved system.

A terminal device in embodiments of this application may be user equipment, an access terminal, a subscriber unit, a subscriber station, a mobile station, a remote station, a remote terminal, a mobile device, a user terminal, a terminal, a wireless communication device, a user agent, or a user apparatus. Alternatively, the terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a future network, or a terminal device in a future evolved public land mobile network (Public Land Mobile Network, PLMN), or the like. This is not limited in embodiments of this application.

A network device in embodiments of this application may be a device configured to communicate with a terminal device. The network device may be a base transceiver station (Base Transceiver Station, BTS) in a global system of mobile communication (Global System of Mobile communication, GSM) system, a code division multiple access (Code Division Multiple Access, CDMA) system, a NodeB (NodeB, NB) in a wideband code division multiple access (Wideband Code Division Multiple Access, WCDMA) system, an evolved NodeB (Evolved NodeB, eNB or eNodeB) in an LTE system, or a radio controller in a cloud radio access network (Cloud Radio Access Network, CRAN) scenario. Alternatively, the network device may be a relay station, an access point, a vehicle-mounted device, a wearable device, a network device in a future network, a network device in a future evolved PLMN network, or the like. This is not limited in embodiments of this application.

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

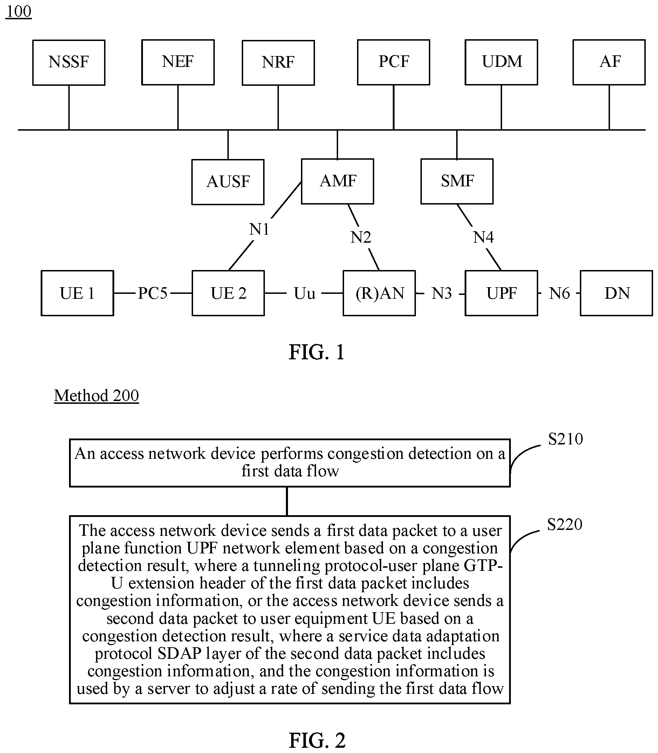

For ease of understanding embodiments of this application, a schematic diagram of a structure of a communication system 100 according to an embodiment of this application is first briefly described with reference to FIG. 1.

As shown in FIG. 1, a 5G system (the 5^{th} generation system, 5GS) is used as an example of the network architecture. The network architecture may include but is not limited to: a network slice selection function (network slice selection function, NSSF), an authentication server function (authentication server function, AUSF), unified data management (unified data management, UDM), a network exposure function (network exposure function, NEF), a network repository function (NF repository function, NRF), a policy control function (policy control function, PCF), an application function (application function, AF), an access and mobility management function (access and mobility management function, AMF), a session management function (session management function, SMF), user equipment (user equipment, UE), a radio access network device, a user plane function (user plane function, UPF), and a data network (data network, DN).

The DN may be the internet. The NSSF, the AUSF, the UDM, the NEF, the NRF, the PCF, the AF, the AMF, the SMF and the UPF are network elements in a core network. Because a 5G system is used as an example in FIG. 1, the core network may be referred to as a 5G core network (5G core network, 5GC or 5GCN).

The following briefly describes network elements shown in FIG. 1.
1. UE: may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device having a wireless connection function or a vehicle-mounted device. Currently, examples of some terminals are as follows: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication capability, a computing device or another processing device connected to a wireless modem, a vehicle-mounted device, a wearable device, a terminal device in a 5G network, a terminal device in a future evolved public land mobile network (public land mobile network, PLMN), and the like. This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear via a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, the wearable intelligent device includes a full-function, large-size, and complete or partial functions that can be implemented without depending on a smartphone, for example, a smartwatch or smart glasses, and focuses on only a type of application function and needs to be used with other devices such as smartphones, for example, various smart bands and smart jewelry that perform physical sign monitoring.

In addition, the terminal device in embodiments of this application may alternatively be a terminal device in an IoT system. An IoT is an important part of future development of information technologies. A main technical feature of the IoT is connecting a thing to a network through a communication technology, to implement an intelligent network for interconnection between a person and a machine or between one thing and another.

It should be noted that a terminal device and an access network device may communicate with each other via an air interface technology (for example, an NR technology or an LTE technology). Terminal devices may also communicate with each other via an air interface technology (for example, an NR technology or an LTE technology).

In embodiments of this application, an apparatus configured to implement a function of a terminal device may be a terminal device, or may be an apparatus that can support a terminal device in implementing the function, for example, a chip system or a chip. The apparatus may be installed in the terminal device. In this embodiment of this application, the chip system may include a chip, or may include a chip and another discrete component.

2. (Radio) access network ((radio) access network, (R)AN) device: may provide a function of accessing a communication network for an authorized user in a specific area, and may specifically include a wireless network device in a 3^{rd} generation partnership project (3^{rd} generation partnership project, 3GPP) network, or may include an access point in a non-3GPP (non-3GPP) network. For ease of description, the following uses an AN device for representation.

The AN device may use different radio access technologies. Currently, there are two types of wireless access technologies: a 3GPP access technology (for example, a wireless access technology used in a 3^{rd} generation (3^{rd} generation, 3G) system, a 4^{th} generation (4^{th} generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), or a code division multiple access (code division multiple access, CDMA). The AN device may allow interconnection and interworking between a terminal device and a 3GPP core network via the non-3GPP technology.

The AN device can be responsible for functions such as radio resource management, quality of service (quality of service, QoS) management, data compression, and encryption on an air interface side. The AN device provides an access service for the terminal device, to complete forwarding of a control signal and user data between the terminal device and the core network.

For example, the AN device may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a radio relay node, a radio backhaul node, a transmission point (transmission point, TP), or a transmission and reception point (transmission and reception point, TRP); or may be a gNB or a transmission point (TRP or TP) in a 5G (for example, NR) system, or one antenna panel or a group of antenna panels (including a plurality of antenna panels) of a base station in a 5G system; or may be a network node constituting a gNB or a transmission point, for example, a distributed unit (distributed unit, DU), or a base station in a next-generation 6G communication system. Neither of a specific technology and a specific device form used for the AN device is limited in embodiments of this application.

3. AMF: is mainly used for functions such as access control, mobility management, and attachment and detachment.

4. SMF: is mainly used for user plane network element selection, user plane network element redirection, internet protocol (internet protocol, IP) address allocation for a terminal device, session establishment, modification, and release, and QoS control.

5. UPF: is mainly used for receiving and forwarding of user plane data. For example, the UPF may receive user plane data from a DN, and send the user plane data to a terminal device through an AN device. The UPF may further receive user plane data from the terminal device through the AN device, and forward the user plane data to the DN.

6. NEF: is mainly configured to securely expose, to the outside, a service, a capability, and the like that are provided by a 3GPP network function.

7. PCF: is mainly configured to guide a unified policy framework for network behavior, and provide policy rule information and the like for a control plane network element (for example, an AMF or an SMF).

8. AF: is mainly configured to provide a service for a 3GPP network, for example, interact with a PCF to perform policy control.

9. Network slice selection function (network slice selection function, NSSF): is mainly used for network slice selection.

10. UDM: is mainly used for subscription data management of UE, including storage and management of a UE identifier, access authorization of the UE, and the like.

11. DN: is mainly used for an operator network that provides a data service for UE, for example, the internet (Internet), a third-party service network, and an IP multi-media service (IP multi-media service, IMS) network.

12. AUSF: is mainly used for user authentication and the like.

13. NRF: is mainly configured to store a network functional entity, description information of a service provided by the network functional entity, and the like.

In the network architecture shown in FIG. 1, network elements may communicate with each other through interfaces. For example, a UE 2 is connected to the AN device via a radio resource control (radio resource control, RRC) protocol, and the UE and the AN device communicate with each other through a Uu interface. A UE 1 and a UE 2 communicate with each other through a PCS interface. The PCS interface may be used for mutual discovery between the UEs and data and signaling transmission between the UEs. In addition, in FIG. 1, N1 is an interface between the UE 2 and an AMF, N2 is an interface between the (R)AN and the AMF, and is used to send a NAS message and the like; N3 is an interface between the RAN and the UPF, and is used to transmit user plane data and the like; and N4 is an interface between the SMF and the UPF, and is used to transmit information, for example, tunnel identification information of an N3 connection, data buffer indication information, and a downlink data notification message. An N6 interface is an interface between a UPF and a DN, and is configured to transmit user plane data and the like. An N11 interface is an interface between an AMF and an SMF.

It should be understood that the network architecture shown above is merely an example for description, and a network architecture applicable to embodiments of this application is not limited thereto. Any network architecture that can implement functions of the foregoing network elements is applicable to embodiments of this application.

It should be further understood that the functions, in other words, the network elements, such as the AMF, the SMF, the UPF, the PCF, the UDM, the NSSF, and the AUSF shown in FIG. 1 may be understood as network elements configured to implement different functions, and for example, may be combined into a network slice based on a requirement. These network elements may be independent devices, or may be integrated into a same device to implement different functions, or may be network components in a hardware device, or may be software functions running on dedicated hardware, or may be instantiated virtualization functions on a platform (for example, a cloud platform). Specific forms of the network elements are not limited in this application.

It should be further understood that the foregoing names are defined merely for distinguishing between different functions, and should not constitute any limitation on this application. This application does not exclude a possibility of using other names in a 6G network and another future network. For example, in the 6G network, a part or all of the foregoing network elements may still use terms in 5G, or may use other names.

It should be further understood that FIG. 1 is merely an application scenario of embodiments of this application, and a scenario to which the method is applied is not limited in this application. In the following embodiments, for ease of understanding and description, the method provided in embodiments of this application is described in detail by using a service-based architecture as an example.

In a SGS communication system, effective congestion control cannot be provided when transmission is performed via an existing protocol, and normal running of a network is affected when media stream transmission consumes a large quantity of network resources. For example, in a congestion control algorithm based on an RTP/RTCP protocol, network congestion detection and determining are performed on a device side and a server side, and a problem that a network may cause an algorithm to be inaccurate is not considered. As a result, congestion detection is inaccurate or congestion control is not performed in a timely manner. Consequently, communication quality is affected and user experience is directly affected.

This application provides a communication method and apparatus, to provide congestion detection and control for implementing a media streaming service, thereby ensuring normal running during network transmission and ensuring user experience.

Specific embodiments are used below to describe in detail the technical solutions of this application. The following several specific embodiments may be combined with each other, and a same or similar concept or process may not be described repeatedly in some embodiments.

The following describes in detail a communication method and apparatus provided in embodiments of this application with reference to the accompanying drawings.

FIG. 2 is a schematic block diagram of a communication method according to an embodiment of this application. The method 200 shown in FIG. 2 may be applied to the network architecture shown in FIG. 1, and the method 200 may be performed by the access network device shown in FIG. 1.

The method 200 includes the following steps.

S210: The access network device performs congestion detection on a first data flow.

The first data flow is a to-be-detected data flow.

Specifically, a data packet on which the access network device performs congestion detection may be a downlink data packet used to transmit data of the data flow, or may be a data packet used for congestion detection or a dummy packet (where the data packet or the empty packet may not carry data of the data flow). This is not limited in embodiments of this application.

After performing congestion detection on the data flow, the access network device obtains a congestion detection result. The congestion detection result may be, for example, an indicator such as a downlink queue delay, a packet loss, or a buffer size.

In a possible implementation, the access network device separately calculates detection results of congestion between a RAN and UE and between a UPF and the RAN based on GTP-U packet receiving and sending timestamps. For a case in which the access network device detects a congestion status between the UPF and the RAN, refer to related content of QoS monitoring in the 3GPP standard TS 23.501. This is not limited in embodiments of this application. For a case in which the access network device detects a congestion status between the RAN and the UE, refer to content in the 3GPP standard TS 38.314. This is not limited in embodiments of this application.

Before step S210, the method may further include the following content.

In a possible implementation, the access network device receives a first data flow identifier.

The access network device receives a data flow identifier of a data flow on which congestion detection is to be performed. The access network device may perform congestion detection on the first data flow based on the data flow identifier.

For example, the access network device is configured with one or more data flow identifiers related to congestion detection. When the data flow identifier received by the access network device belongs to the one or more data flow identifiers, the access network device determines that congestion detection needs to be performed on the data flow corresponding to the received data flow identifier.

In another possible implementation, the access network device receives a data flow identifier and a congestion identifier. The congestion identifier indicates that congestion detection needs to be performed on a data flow corresponding to the data flow identifier, or the congestion identifier indicates that congestion information of the data flow needs to be fed back. That is, the access network device may perform, based on the data flow identifier and the congestion identifier, congestion detection on the data flow corresponding to the data flow identifier.

It may be understood that, in this case, the access network device may not preconfigure identifiers of some data flows that need to be detected.

By way of example but not limitation, the congestion identifier may be a field, and the field indicates, by true or false, whether congestion detection needs to be performed. Alternatively, the congestion identifier may be an information element or a message used to carry the data flow identifier, and a type or a name of the information element or the message is related to congestion detection.

Optionally, a field used to carry the congestion identifier may also be used to transmit the congestion information after the access network device performs congestion detection. That is, the congestion identifier is used by the access network device to feed back the congestion information after the access network device performs congestion detection on the data flow. For example, a field #A is used as the congestion identifier. The access network device obtains the congestion detection result after performing congestion detection on the data flow, and determines the congestion information based on the detection result. The field #A is used to feed back a congestion level.

The access network device may receive, from a core network device, the data flow identifier of the data flow on which congestion detection is to be performed. This may be specifically implemented in the following manner.

In a possible implementation, the access network device receives a data packet from the UPF network element. The data packet includes the data flow identifier, and may further include the congestion identifier. In an example, the data packet is a downlink data packet, and a GTP-U header of the downlink packet includes the data flow identifier and the congestion identifier. It may be understood that when the downlink data packet received by the access network device includes the congestion identifier, the access network device may perform congestion detection on the data packet based on the congestion identifier. That is, the access network device may perform congestion detection on the data flow (to be specific, on a data packet that carries the congestion identifier) based on the congestion identifier. Based on this implementation, the access network device may not consider the data flow identifier, but determine, only depending on whether a data packet carries the congestion identifier, whether a congestion result of the data packet needs to be calculated.

In still another possible implementation, the access network device receives congestion detection information from an SMF network element. The congestion detection information includes the data flow identifier, and may further include the congestion identifier.

In this application, the congestion detection information may include at least one of a queue delay, congestion reporting time, a packet loss rate, a buffer size, a periodicity, a congestion level, and a rate reduction proportion. Alternatively, the congestion detection information may include other parameters and data that are used to ensure a congestion status and the congestion information. This is not limited in embodiments of this application.

By way of example but not limitation, the data flow identifier may be a QFI of a QoS data flow. In a possible implementation, the SMF binds a PCC rule to the QoS flow that is in a PDU session, and defines an identifier of the data flow. It may be understood that the QoS flow is a QoS flow that carries the congestion identifier, and the QoS flow may be an existing QoS flow, or may be a newly established or modified QoS flow. This is not limited in embodiments of this application.

S220: The access network device sends a first data packet to the user plane function UPF network element based on the congestion detection result, where a GTP-U header of the first data packet includes the congestion information, or the access network device sends a second data packet to the user equipment UE based on the congestion detection result, where an SDAP layer of the second data packet includes the congestion information.

A GPRS tunneling protocol (GPRS tunneling protocol, GTP) is a group of IP-based higher-layer protocols (refer to the 3GPP standard protocol 29.281) and is located above a TCP/IP protocol and a UDP/IP protocol. A user plane part of GTP (user plane part of GTP, GTP-U) is a tunneling protocol based on the IP/UDP, and allows establishment of a plurality of tunnels between GTP-U entities (protocol entities). In the GTP-U, original service data sent by the UE is referred to as a transport protocol data unit (transport protocol data unit, T-PDU). A T-PDU encapsulated with a GTP-U header in the GTP-U entity is referred to as a GTP encapsulated user plane data unit (GTP encapsulated user plane data unit, G-PDU).

A service data adaptation protocol (service data adaptation protocol, SDAP) layer is a newly added protocol layer in NR (for details, refer to the 3GPP standard protocol 37.324). Main functions of the SDAP layer include mapping between a QoS flow and a data radio bearer and a marking QoS flow ID (QFI) in downlink and uplink packets.

In this application, the first data packet and the second data packet may be the same, or may be different. This is not limited in embodiments of this application.

The first data packet or the second data packet may be a data packet used to transmit data, or may be a data packet periodically established by the UPF and sent to the RAN, or a data packet periodically established by the RAN, for example, a monitoring packet (monitoring packet) or a dummy packet (dummy packet).

The access network device feeds back the congestion information to a server via the UPF or the UE, so that the server can adjust, based on the congestion information of the data flow, a rate for sending the data flow. It may be understood that the congestion information sent by the UPF or the UE to the server may be the same as or different from the congestion information received from the access network device (for example, an information expression manner is changed when the information is sent to the server, or after secondary processing is performed on the information, processed information is sent to the server).

The congestion information may include information about a data transmission status determined after a network device performs congestion detection on the data flow, where the information is, for example, a queue delay value, a quantity of lost packets or the packet loss rate, the buffer size or buffer proportion information, the reporting periodicity, the congestion level, and the rate reduction proportion. The congestion information may alternatively be information indicating a data transmission status. For example, the congestion information includes a field #1, and the field #1 indicates that a queue delay is greater than a preset threshold. Alternatively, the congestion information may further include a field #2, and the field #2 indicates that the packet loss rate is greater than a preset threshold, or the like. Alternatively, the congestion information may be related information that indicates whether congestion occurs or the congestion level. For example, the congestion information includes a field #3, and the field #3 indicates that the congestion occurs; the congestion information may further include a field #3, and the field #4 indicates that a congestion level is high. This is not limited in embodiments of this application.

It should be noted that the congestion information may reflect a congestion degree of the data flow, or may be understood as that the congestion information may reflect a transmission status of the data flow, so that a server side obtains the transmission status of the data flow in real time and determines, based on a service level requirement, whether a transmission rate needs to be adjusted.

It should be further understood that, in this application, the congestion information may include congestion information (first congestion information for short below) between the UPF and the access network device (UPF-access network device for short below), or may include air interface congestion information (second congestion information for short below) between the UE and the access network device (UE-access network device for short below).

Specifically, the access network device determines the congestion information based on the congestion detection result.

That a GTP-U header includes the congestion information may be that one or more bits in the GTP-U header are used to carry the congestion information, or may be that the GTP-U header is extended by one or more bits only when the congestion information needs to be carried, and the extension bit carries the congestion information.

Similarly, that an SDAP layer includes the congestion information may be that one or more bits in the SDAP layer are used to carry the congestion information, or may be that the SDAP layer is extended by one or more bits only when the congestion information needs to be carried, and the extension bit carries the congestion information.

In a possible implementation, before sending the first data packet to the UPF or the UE, the access network device may determine whether the congestion detection result meets a corresponding feedback condition.

The feedback condition may also be referred to as a reporting condition. The feedback condition may be preset by an AF/AS, or may be preset by the access network device.

The feedback condition may include specific parameter information that needs to be met by the congestion detection result. When the result of congestion detection by the access network device on the data flow meets the feedback condition, the access network device sends the congestion information.

For example, the access network device obtains the congestion level based on the congestion detection result. When the feedback condition is a congestion level #1, the access network device may determine whether the congestion level obtained based on the congestion detection result meets the congestion level #1. If the congestion level meets the congestion level #1, the access network device sends the first data packet to the UPF or the UE. If the congestion level does not meet the congestion level #1, the access network device does not send the first data packet, or forbids or stops sending the first data packet.

For another example, the access network device obtains the rate reduction proportion based on the congestion detection result. When the feedback condition is a rate reduction proportion #1, the access network device may determine whether the rate reduction proportion obtained based on the congestion detection result meets the rate reduction proportion #1. If the rate reduction proportion meets the rate reduction proportion #1, the access network device sends the first data packet to the UPF or the UE. If the rate reduction proportion does not meet the rate reduction proportion #1, the access network device does not send the first data packet. In this case, the AF/AS may further directly adjust a rate based on the rate reduction proportion, to increase an adjustment rate of the AF/AS.

It may be understood that the access network device may further directly determine whether the congestion detection result directly meets the specific parameter information, to determine whether to send, not to send, forbid sending, or stop sending the first data packet. Details are not described herein.

In a possible implementation, the UPF network element receives the first data packet from the access network device. The GTP-U header of the data packet includes the congestion information, and the data packet may be an uplink data packet. Further, the UPF may send the first data packet to the server. Alternatively, the data packet may be a downlink data packet. The data packet is sent to the UE, and is sent to the server via the UE.

In a possible implementation, the UPF network element receives the first data packet from the access network device, where the GTP-U header of the data packet includes the congestion information. The UPF sends the congestion information to a NEF (for example, via a capability exposure notify (Nupf_EventExposure_Notify) message), and then the NEF forwards the congestion information to the AF/AS. It may be understood that the congestion information sent by the UPF to the AF/AS may be the same as or different from the congestion information received from the access network device (for example, an information expression manner is changed when the information is sent to the server, or after secondary processing is performed on the information, processed information is sent to the AF/AS).

In a possible implementation, the UE receives the first data packet from the access network device, the SDAP layer of the data packet includes the congestion information, and the terminal reports the congestion information to the AF/AS. For example, the terminal may forward the congestion information to an upper layer via a modem (MODEM), and send the congestion information to the AF/AS.

In a possible implementation, before sending the congestion information to the AF/AS, the UPF may determine whether the congestion detection result meets the first condition.

For the first condition, refer to the foregoing description of the feedback condition. Details are not described herein again.

Based on the technical solution provided in embodiments of this application, the access network device performs congestion detection on the data packet based on the congestion identifier and the data flow identifier, and sends the congestion information to the UPF based on the congestion detection result via the GTP-U header of the data packet or sends the congestion information to the UE via the SDAP layer. The congestion information is used by the server to adjust the rate for sending the data flow, so that congestion detection and control can be provided for implementing a media streaming service, thereby ensuring normal running during network transmission.

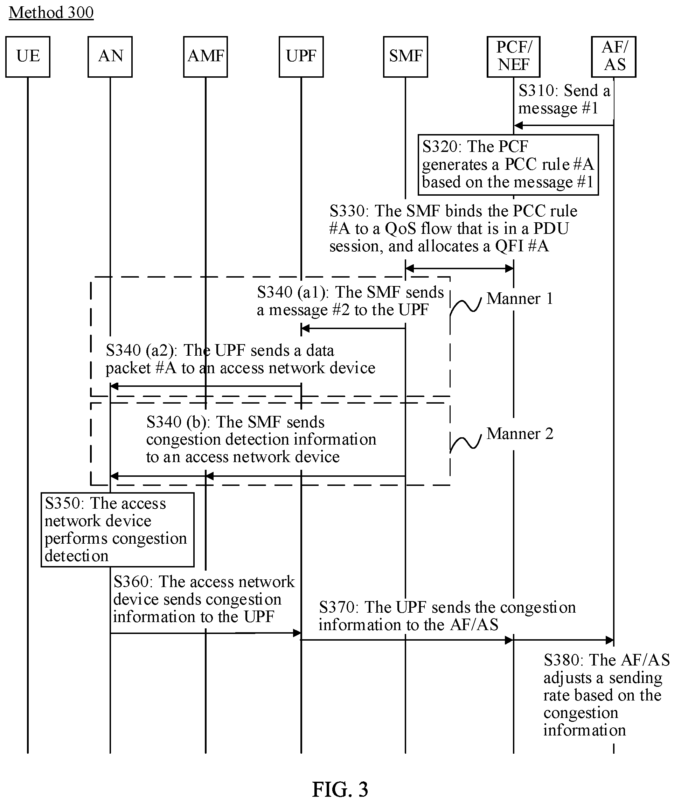

FIG. 3 is a schematic interaction diagram of a communication method applicable to an embodiment of this application. The method 300 may be considered as a specific implementation of the method 200, and the method 300 may include the following steps.

S310: An AF/AS sends a message #1 to a PCF/an NEF.

Specifically, the message #1 includes a congestion information notification message, and the congestion information notification message indicates a reporting manner of reporting congestion information to the AF/AS. It may be understood that the congestion information notification message may alternatively be named after another message name, or this may be understood as that the congestion information notification message is a logical summary of one or more pieces of information that indicates a reporting manner of reporting the congestion information to the AF/AS.

For example, the congestion information notification message may include notification periodicity information (a periodicity of reporting the congestion information to the AF/AS), notification time indication information (time of reporting the congestion information to the AF/AS), and notification manner information (a specific manner of reporting the congestion information to the AF/AS). The foregoing is merely for example description, and is not limited in embodiments of this application.

The message #1 may include flow description (flow description). The flow description may include a service flow quintuple, a fully qualified domain name (fully qualified domain name, FQDN), and the like. This is not limited in embodiments of this application.

For example, the message #1 may be a subscription message.

In a possible implementation, the PCF/NEF sends a subscription request message to the AF/AS. The subscription request message is used by the AF/AS to send a notification message related to the congestion information to the PCF/NEF. Correspondingly, the AS/AS receives the subscription request message.

S320: The PCF generates a PCC rule #A based on the message #1.

Specifically, the PCF obtains a QoS parameter of a corresponding QoS flow based on the flow description included in the message #1, and generates, based on the QoS parameter, the PCC rule #A used for congestion detection.

S330: An SMF binds the PCC rule #A to the QoS flow.

The PCC rule #A may include information about a data flow #A (in other words, the PCC rule #A defines the data flow #A).

The SMF may bind the PCC rule #A to a part or all of existing QoS flows that are in a PDU session, to use the bound QoS flow as a data flow on which congestion detection is to be performed. The bound QoS flow may use a QFI that is before the binding. When the PCC rule #A includes a QFI, the bound data flow may use the QFI that is in the PCC rule #A.

The SMF may alternatively create a new QoS flow based on the PCC rule #A, and the QoS flow may be used to transmit data on which congestion detection needs to be performed and that is in the PDU session. An identifier of the QoS flow may be the QFI that is in the PCC rule #A.

S340 (a1): The SMF sends a message #2 to a UPF.

Specifically, the message #2 includes congestion detection information, and the congestion detection information may include a QFI #A and a congestion identifier, and may further include one or more of information, for example, the flow description or reporting time of the congestion information. For example, the message #2 may be an N4 setup request message, or may be an N4 modification request message.

In a possible embodiment, the SMF specifically extends, via an N4 message, a context message by parameter information related to congestion detection.

S340 (a2): The UPF sends a data packet #A to an access network device.

The UPF carries the congestion detection information in the data packet #A.

It may be understood that the congestion detection information sent by the UPF to the access network device may be the same as or different from the congestion detection information received from the SMF (for example, an information expression manner is changed when the information is sent to the access network device, or after secondary processing is performed on the information, processed information is sent to the access network device).

In a possible implementation, the UPF carries the congestion detection information in a user plane data packet.

For example, the UPF carries the QFI #A and the congestion identifier in a GTP-U packet header of a sent downlink data packet, and may further include one or more of information, for example, the flow description, the reporting time of the congestion information, and a sending or receiving timestamp of the packet.

It should be understood that the foregoing steps S340 (a1) and S340 (a2) are a manner (Manner 1) in which the SMF sends the congestion detection information to the access network device, and the following step S340 (b) is another manner (Manner 2). Either Manner 1 or Manner 2 may be performed. This is not limited in embodiments of this application.

S340 (b): The SMF sends the congestion detection information to the access network device.

Specifically, the SMF sends the congestion detection information to the AMF, and then the AMF sends the congestion detection information to the access network device. Correspondingly, the access network device receives the congestion detection information from the AMF. For specific content of the congestion detection information, refer to step S340 (a). Details are not described herein again.

For example, the SMF may send the congestion detection information to the AMF via an N11 message. The N11 message may be an N1N2 message transfer (Namf_communication_N1N2MessageTransfer) message. Further, the AMF sends the congestion detection information to the access network device via an N2 message. S350: The access network device performs congestion detection.

S350: The access network device performs congestion detection.

For this process, refer to the description of S210.

In an implementation, the access network device preconfigures a data flow identifier of a data flow on which congestion detection is to be performed. The access network device determines, based on a case in which the QFI #A in the congestion detection information belongs to the foregoing preconfigured data flow identifier, that congestion detection needs to be performed on the data flow #A, and detects the data flow #A to obtain a congestion detection result.

In another implementation, the access network device determines, based on the congestion identifier and the QFI #A, that the QFI #A determines that congestion detection needs to be performed on the data flow #A, and detects the data flow #A to obtain a congestion detection result.

It may be understood that the congestion identifier indicates to perform congestion detection on the data flow corresponding to the QFI #A and feed back the congestion information.

For a manner in which the access network device performs congestion detection, refer to step S210 in the method 200. Details are not described herein again.

Specifically, after performing congestion detection, the access network device carries the congestion information in a GTP-U header of a corresponding data packet, to subsequently feed back the congestion information to the AF/AS, so that the AF/AS may adjust a data transmission rate based on the congestion information.

S360: The access network device sends the congestion information to the UPF.

For details of this process, refer to the description of S220.

It may be understood that the access network device sends the data packet #A to the UPF via a user plane, and a GTP-U header of the data packet #A includes the congestion information.

Optionally, before sending the congestion information to the UPF, the access network device may determine whether the congestion detection result meets a feedback condition (as an example of a first condition). The determining manner is similar to the determining manner in step S220 in the method 200, and details are not described herein again.

Specifically, the access network device determines the congestion information based on the congestion detection result.

In an example, that the access network device carries the congestion information in the GTP-U header of the data packet #A includes but is not limited to the following manners.
a. The GTP-U header of the data packet #A includes the congestion information, and the GTP-U header may specifically carry at least one of the following information: whether congestion occurs, a quantity of data packets that encouter congestion, a queue delay value, a quantity of lost packets, buffer size information, a periodicity, a congestion level, a rate reduction proportion, and the like.
b. When the GTP-U header of the data packet #A needs to carry the congestion information, the GTP-U header is extended, and a GTP-U extension header includes the congestion information. The GTP-U extension header may specifically carry at least one of the following information: whether congestion occurs, a quantity of data packets on which congestion occurs, a queue delay proportion and a threshold delay proportion, a packet loss proportion, buffer proportion information, a periodicity, a congestion level, a rate reduction proportion, and the like.

The foregoing example is merely for example description, and constitutes no limitation on embodiments of this application.

S370: The UPF sends the congestion information to the AF/AS.

Specifically, the UPF sends the congestion information to the AF/AS via a control plane.

In a possible implementation, the UPF reports the congestion information to the SMF via an N4 session message, and the SMF forwards the congestion information to the AF/AS, or the SMF forwards the congestion information to the AF/AS via the NEF. It may be understood that the congestion information sent by the SMF to the AF/AS may be the same as or different from the congestion information received from the UPF (for example, an information expression manner is changed when the information is sent to the AF/AS, or after secondary processing is performed on the information, processed information is sent to the AF/AS).

In still another possible implementation, the UPF sends the congestion information to the NEF via a capability exposure notify (Nupf_EventExposure_Notify) message, and the NEF forwards the congestion information to the AF/AS. Alternatively, the UPF may directly send the congestion information to the AF/AS via a capability exposure notify (Nupf_EventExposure_Notify) message.

Optionally, before sending the congestion information to the AF/AS, the UPF may determine whether the congestion detection result meets a feedback condition (as an example of a first condition). If the UPF determines that the congestion detection result meets the feedback condition, the UPF sends the congestion information to the AF/AS. By contrast, if the UPF determines that the congestion detection result does not meet the feedback condition, the UPF does not send the congestion information, or forbids or stops sending the congestion information to the AF/AS.

The feedback condition and a specific determining manner are similar to those in step S220, and are not repeatedly described herein.

S380: The AF/AS adjusts a sending rate based on the congestion information.

Specifically, the AF/AS calculates and adjusts, based on the congestion information, the rate for sending the data packet.

Based on the technical solution provided in embodiments of this application, the access network device performs congestion detection on the data packet based on the congestion identifier and the data flow identifier, and sends the congestion information to the UPF based on the detection result via the GTP-U header of the data packet. The congestion information is used by a server to adjust the rate for sending the data flow, so that congestion detection and control can be provided for implementing a media streaming service, thereby ensuring normal running during network transmission.

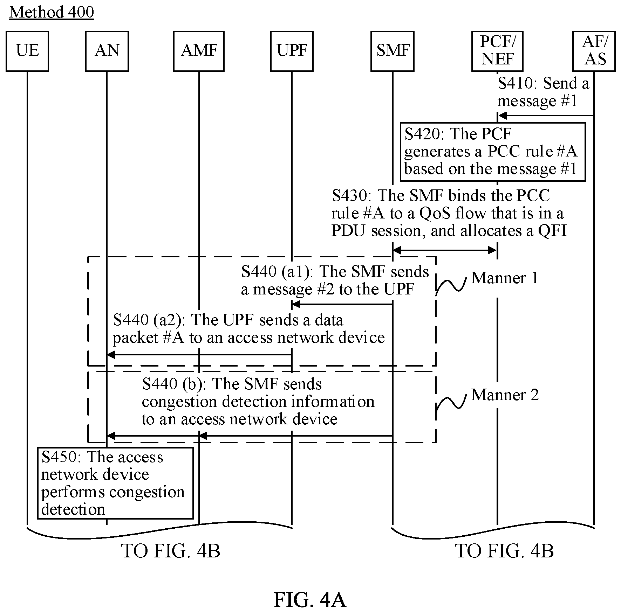

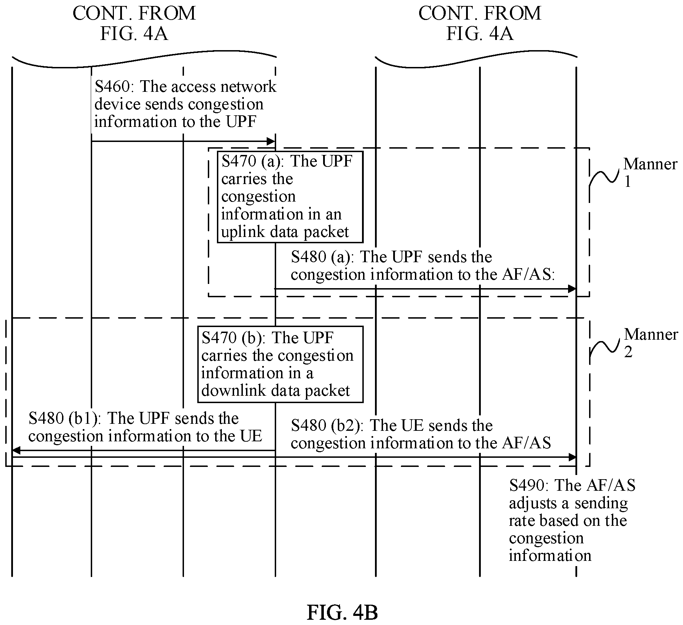

FIG. 4A and FIG. 4B are another schematic interaction diagram of a communication method applicable to an embodiment of this application. FIG. 4A and FIG. 4B are another schematic interaction diagram of a communication method applicable to an embodiment of this application. A method 400 may be considered as another specific implementation of the method 200.

In the method 300, the UPF sends the congestion information to the AF/AS via the control plane. In this embodiment, the UPF may send the congestion information to the AF/AS via a data plane. Specific steps of the method 400 are as follows.

Step S410 to step S460 are the same as step S310 to step S360, and details are not described herein again.

In the following steps, S470 (a) and S480 (a) are specific steps (Manner 1) in which a UPF carries congestion information in an uplink data packet; and S470 (b), S480 (b1), and S480 (b2) are specific steps (Step 2) in which the UPF carries congestion information in a downlink data packet.

S470 (a): The UPF carries the congestion information in the uplink data packet.

Specifically, the UPF carries the congestion information in an uplink data packet #A.

It should be noted that the UPF may carry the congestion information on any layer of the data packet #A, where for example, the any layer may be a GTP-U layer or an IP layer.

For example, the data packet #A may be an Ack data packet, or may be a data packet periodically established by the UPF or a RAN, for example, a monitoring packet (monitoring packet) or a dummy packet (dummy packet).

Optionally, before carrying the congestion information in the uplink data packet #A, the UPF may further determine whether a congestion detection result meets a feedback condition (as an example of a first condition). If the UPF determines that the congestion detection result meets the feedback condition, the UPF carries the congestion information in the uplink data packet #A. By contrast, if the UPF determines that the congestion detection result does not meet the feedback condition, the UPF does not carry the congestion detection information in the uplink data packet #A, or forbids or stops carrying the congestion detection information in the uplink data packet #A.

It may be understood that the UPF may obtain the congestion detection result via the congestion information sent by an access network device, or the UPF may receive the congestion detection result from an access network device. This is not limited in embodiments of this application.

In this embodiment, a specific feedback condition, namely, a determining manner, is similar to that in step S370 in the method 300. For details, refer to the detailed description in step S370. Details are not described herein again.

S480 (a): The UPF sends the congestion information to an AF/AS.

Specifically, the UPF sends, via a control plane, the data packet #A that carries the congestion information to the AF/AS.

A specific sending manner is the same as step S370 in the method 300, and details are not described herein again.

Optionally, before sending the data packet #A to the AF/AS, the UPF may further determine whether the feedback condition (as the example of the first condition) is met. If the UPF determines that the congestion detection result meets the feedback condition, the UPF sends the data packet #A to the AF/AS. By contrast, if the UPF determines that the congestion detection result does not meet the feedback condition, the UPF does not send the data packet #A to the AF/AS, or forbids or stops sending the data packet #A to the AF/AS.

It may be understood that the UPF may obtain the congestion detection result via the congestion information sent by the access network device, or the UPF may receive the congestion detection result from the access network device. This is not limited in embodiments of this application.

In this embodiment, a specific feedback condition, namely, a determining manner, is the same as that in step S370 in the method 300. For details, refer to the detailed description in step S370. Details are not described herein again.

S470 (b): The UPF carries the congestion information in the downlink data packet.

Specifically, the UPF carries the congestion information in a downlink data packet #A.

It should be noted that the UPF may carry the congestion information on any layer of the data packet #A, where for example, the any layer may be a GTP-U layer or an IP layer.

For example, the UPF extends an ECN identifier of an IP header of the downlink data packet by the congestion information.

Optionally, before carrying the congestion information in the downlink data packet #A, the UPF may further determine whether a feedback condition (as an example of a first condition) is met. If the UPF determines that the congestion detection result meets the feedback condition, the UPF carries the congestion information in the downlink data packet #A. By contrast, if the UPF determines that the congestion detection result does not meet the feedback condition, the UPF does not carry the congestion information in the downlink data packet #A, or forbids or stops carrying the congestion information in the data packet #A.

It may be understood that the UPF may obtain the congestion detection result via the congestion information sent by an access network device, or the UPF may receive the congestion detection result from an access network device. This is not limited in embodiments of this application.

In this embodiment, a specific feedback condition, namely, a determining manner, is the same as that in step S370 in the method 300. For details, refer to the detailed description in step S370. Details are not described herein again.

S480 (b 1): The UPF sends the congestion information to UE.

Specifically, the UPF sends, via the access network device, the data packet #A that carries the congestion information to the UE.

For example, the UPF may send the data packet #A to the access network device via an N3 message. Further, the access network device sends the data packet #A to the UE through a Uu interface.

Optionally, before sending the data packet #A to the UE, the UPF may further determine whether the feedback condition (as the example of the first condition) is met. If the UPF determines that the congestion detection result meets the feedback condition, the UPF sends the data packet #A to the UE. By contrast, if the UPF determines that the congestion detection result does not meet the feedback condition, the UPF does not send the data packet #A to the UE, or forbids or stops sending the data packet #A to the AF/AS.

It may be understood that the UPF may obtain the congestion detection result via the congestion information sent by the access network device, or the UPF may receive the congestion detection result from the access network device. This is not limited in embodiments of this application.

In this embodiment, a specific feedback condition, namely, a determining manner, is the same as that in step S370 in the method 300. For details, refer to the detailed description in step S370. Details are not described herein again.

S480 (b2): The UE sends the congestion information to the AF/AS.

Specifically, the UE sends the uplink data packet #A that carries the congestion information to the AF/AS.

S490: The AF/AS adjusts a sending rate based on the congestion information.

Specifically, the AF/AS calculates and adjusts, based on the congestion information, the rate for sending the data packet.

Based on the technical solution provided in embodiments of this application, the access network device performs congestion detection on the data packet based on a congestion identifier and a data flow identifier, and sends the congestion information to the UPF based on the detection result via a GTP-U header of the data packet. The UPF sends the congestion information to a server via the uplink and downlink data packets. The congestion information is used by the server to adjust the rate for sending the data flow, so that congestion detection and control can be provided for implementing a media streaming service, thereby ensuring normal running during network transmission.

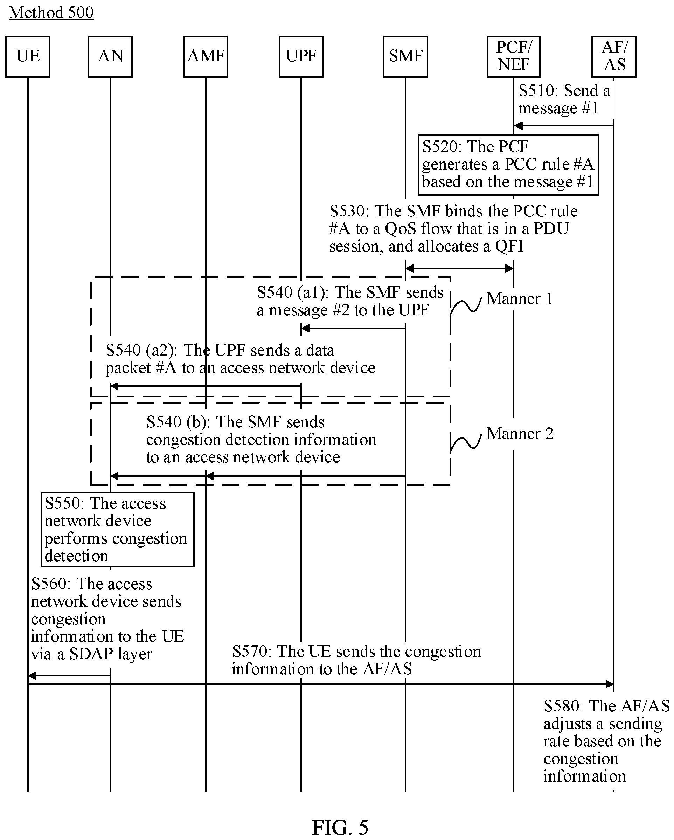

FIG. 5 is another schematic interaction diagram of a communication method applicable to an embodiment of this application. A method 500 may be considered as still another specific implementation of the method 200.

In the method 300, the GTP-U header of the data packet #A includes the congestion information. In this embodiment, a SDAP layer of a data packet #A may also include the congestion information. Specific steps of the method 500 are as follows.

Step S510 to step S540 are the same as step S310 to step S340, and details are not described herein again.

S550: An access network device performs congestion detection.

For this process, refer to the description of S210.

In an implementation, the access network device preconfigures a data flow identifier of a data flow on which congestion detection is to be performed. The access network device determines, based on a case in which a QFI #A in congestion detection information belongs to the foregoing preconfigured data flow identifier, that congestion detection needs to be performed on a data flow #A, and detects the data flow #A to obtain a congestion detection result.

In another implementation, the access network device determines, based on a congestion identifier and a QFI #A, that the QFI #A determines that congestion detection needs to be performed on a data flow #A, and detects the data flow #A to obtain a congestion detection result.

It may be understood that the congestion identifier indicates to perform congestion detection on the data flow corresponding to the QFI #A and feed back the congestion information.

For a manner in which the access network device performs congestion detection, refer to step S210 in the method 200. Details are not described herein again.

Specifically, after performing congestion detection, the access network device carries the congestion information in a SDAP layer of a corresponding data packet, to subsequently feed back the congestion information to an AF/AS, so that the AF/AS may adjust a data transmission rate based on the congestion information.

In an example, that the access network device carries the congestion information in an SDAP layer of the data packet #A includes but is not limited to the following manners.
a. The SDAP layer of the data packet #A includes at least one of the following information: the congestion information, a queue delay value that may be carried, a quantity of lost packets, buffer size information, a periodicity, a congestion level, a rate reduction proportion, and the like.
b. The SDAP layer of the data packet #A includes at least one of the following information: whether congestion occurs, a queue delay proportion and a delay threshold proportion, a packet loss proportion, buffer proportion information, a periodicity, a congestion level, a rate reduction proportion, and the like.

The foregoing example is merely for example description, and constitutes no limitation on embodiments of this application.

S560: The access network device sends the congestion information to UE.

Specifically, the access network device sends the congestion information to the UE via the SDAP layer.

It may be understood that the access network device sends the data packet #A to the UE through a Uu interface, and the SDAP layer of the data packet #A includes the congestion information.

Optionally, before sending the congestion information to the UE, the access network device may determine whether a feedback condition (as an example of a first condition) is met. If the access network device determines that the congestion detection result meets the feedback condition, the access network device sends the congestion information to the UE. By contrast, if the access network device determines that the congestion detection result does not meet the feedback condition, the access network device does not send the congestion information, or forbids or stops sending the congestion information to the UE.

It may be understood that the UPF may obtain the congestion detection result via the congestion information sent by the access network device, or the UPF may receive the congestion detection result from the access network device. This is not limited in embodiments of this application.

In this embodiment, a specific feedback condition, namely, a determining manner, is the same as that in step S370 in the method 300. For details, refer to the detailed description in step S370. Details are not described herein again.

S570: The UE sends the congestion information to the AF/AS.

Specifically, the UE forwards the congestion information to an upper layer via a modem (MODEM).

S580: The AF/AS adjusts a sending rate based on the congestion information.

Specifically, the AF/AS calculates and adjusts, based on the congestion information, the rate for sending the data packet.

Based on the technical solution provided in embodiments of this application, the access network device performs congestion detection on the data packet based on the congestion identifier and the data flow identifier, and sends the congestion information to the UE based on the detection result via the SDAP layer of the data packet, to further forward the congestion information to an upper layer server. The congestion information is used by the server to adjust the rate for sending the data flow, so that congestion detection and control can be provided for implementing a media streaming service, thereby ensuring normal running during network transmission.

Embodiments described in this specification may be independent solutions, or may be combined based on internal logic. All these solutions fall within the protection scope of this application.

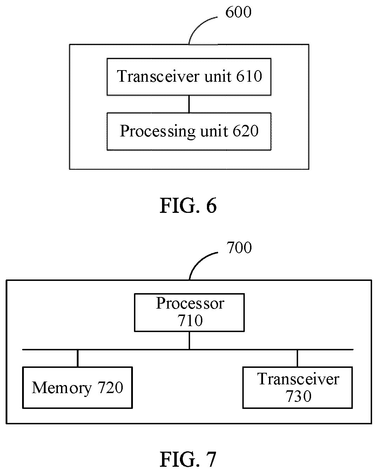

The method provided in embodiments of this application is described above in detail with reference to FIG. 2 to FIG. 5. The following describes in detail apparatuses provided in embodiments of this application with reference to FIG. 6 and FIG. 7. It should be understood that descriptions of apparatus embodiments correspond to the descriptions of the method embodiments. Therefore, for content that is not described in detail, refer to the foregoing method embodiments. For brevity, details are not described herein again.

The apparatus is configured to implement the foregoing embodiments and related implementations, and details that have been described are not described again. As used below, the term "module" may be a combination of software and/or hardware that implement a predetermined function. Although the apparatus described in the following embodiments is preferably implemented by software, implementation of hardware or a combination of software and hardware may also be conceived.

FIG. 6 is a schematic block diagram of a communication apparatus applicable to an embodiment of this application.

The apparatus 600 includes a transceiver unit 610. The transceiver unit 610 may be configured to implement a corresponding communication function. The transceiver unit 610 may also be referred to as a communication interface or a communication unit.

The apparatus 600 may further include a processing unit 620, and the processing unit 620 may be configured to perform data processing.

Optionally, the apparatus 600 further includes a storage unit. The storage unit may be configured to store instructions and/or data. The processing unit 620 may read the instructions and/or the data in the storage unit, so that the apparatus implements actions of different devices in the foregoing method embodiments, for example, actions of an access network device and a UPF network element.

In a design, the apparatus 600 is configured to perform actions performed by the access network device in the foregoing method embodiments.

Specifically, the processing unit 620 is configured to perform congestion detection on a first data flow; and a transceiver unit 610 is configured to send a first data packet to a user plane function UPF network element based on a congestion detection result, where a tunneling protocol-user plane GTP-U header of the first data packet includes congestion information, or further configured to send a first data packet to user equipment UE based on a congestion detection result, where a service data adaptation protocol SDAP layer of the first data packet includes congestion information, and the congestion information is used by a server to adjust a rate for sending the first data flow.

Optionally, the transceiver unit 610 is further configured to receive a data flow identifier of the first data flow.

Optionally, the processing unit 620 is further configured to perform congestion detection on the first data flow based on the data flow identifier.

Optionally, the transceiver unit 610 is further configured to receive a congestion identifier.

Optionally, the processing unit 620 is further configured to perform congestion detection on the first data flow based on the data flow identifier and/or the congestion identifier.

Optionally, the congestion information includes first congestion information and second congestion information, where the first congestion information is congestion information between the access network device and the UPF network element, and the second congestion information is air interface congestion information.

Optionally, the processing unit 620 is further configured to determine that the congestion detection result meets a first condition; and the transceiver unit 610 sends the first data packet to the UPF network element, or sends a second data packet to the UE.

Optionally, the transceiver unit 610 is specifically configured to receive the first data packet from the UPF network element, where the first data packet includes the data flow identifier; or the transceiver unit 610 receives congestion detection information from an SMF network element, where the congestion detection information includes the data flow identifier.

Optionally, the first data packet is a data packet that transmits data and that is of the data flow or a monitoring data packet generated by the access network device or the UPF network element.

Optionally, the first data flow is a data flow that is in a congestion detection policy and charging control PCC rule and that is bound to a quality of service QoS flow.

Optionally, the congestion detection information includes at least one of a queue delay, congestion reporting time, a packet loss rate, a buffer size, a periodicity, a congestion level, and a rate reduction proportion.

Optionally, the congestion information includes at least one of a queue delay proportion and a threshold delay proportion, a packet loss proportion, a buffer size proportion, a congestion level, and a rate reduction proportion.

Optionally, the first data packet is the same as the second data packet, or the first data packet is different from the second data packet.

The apparatus 600 may implement steps or procedures performed by the access network device in the method embodiments corresponding to embodiments of this application. The apparatus 600 may include units configured to perform the methods performed by the access network device in embodiments shown in FIG. 3, FIG. 4A and FIG. 4B, and FIG. 5.

It should be understood that a specific process in which the units perform the foregoing corresponding steps is described in detail in the foregoing method embodiments. For brevity, details are not described herein.

In a design, the apparatus 600 is configured to perform actions performed by the UPF network element in the foregoing method embodiments.

Specifically, the transceiver unit 610 is configured to receive a first data packet from an access network device, where a tunneling protocol-user plane GTP-U header of the first data packet includes first congestion information; and the transceiver unit 610 is further configured to send second congestion information to a server based on the first congestion information, where the second congestion information is used by the server to adjust a rate for sending a data flow.

Optionally, the transceiver unit is specifically configured to send the second data packet to the server, and the second data packet includes the second congestion information.

Optionally, the transceiver unit 610 is configured to send the second congestion information to the server via user equipment UE.

Optionally, the transceiver unit is specifically configured to send a downlink data packet to the UE, where the downlink data packet includes the second congestion information.

Optionally, the transceiver unit is specifically configured to send the second congestion information to the server via a session management function or a network exposure function.

Optionally, the processing unit 620 is further configured to determine that a congestion detection result or the first congestion information meets a first condition; and the transceiver unit 610 is configured to send the congestion information to the server.

Optionally, the first data packet is a data packet of the data flow or a monitoring data packet generated by the access network device or the UPF network element.

Optionally, the congestion information includes at least one of a queue delay proportion and a threshold delay proportion, a packet loss proportion, a buffer size proportion, a congestion level, and a rate reduction proportion.

The apparatus 600 may implement steps or procedures performed by the access network device in the method embodiments corresponding to embodiments of this application. The apparatus 600 may include units configured to perform the methods performed by the UPF network element in embodiments shown in FIG. 3, FIG. 4A and FIG. 4B, and FIG. 5.

It should be understood that a specific process in which the units perform the foregoing corresponding steps is described in detail in the foregoing method embodiments. For brevity, details are not described herein.

It should be understood that a specific process in which the units perform the foregoing corresponding steps is described in detail in the foregoing method embodiments. For brevity, details are not described herein.

In a design, the apparatus 600 is configured to perform actions performed by the terminal device UE in the foregoing method embodiments.

Specifically, the transceiver unit 610 is configured to receive a first data packet, where a GTP-U header of the first data packet includes first congestion information, or a SDAP layer of the first data packet includes first congestion information, where the first congestion information is used by a server to adjust a rate for sending a data flow; and the transceiver unit 610 is further configured to send second congestion information to the server based on the first congestion information.

Optionally, the transceiver unit 610 is specifically configured to receive the first data packet from a user plane function, where the GTP-U header of the first data packet includes the first congestion information.

Optionally, the transceiver unit 610 is specifically configured to receive the first data packet from an access network device, where an SDAP layer of the first data packet includes the first congestion information.

Optionally, the transceiver unit 610 is further configured to send the second congestion information to the server via a modem.

The apparatus 600 may implement steps or procedures performed by the access network device in the method embodiments corresponding to embodiments of this application. The apparatus 600 may include units configured to perform the methods performed by the UE in embodiments shown in FIG. 3, FIG. 4A and FIG. 4B, and FIG. 5.

It should be understood that a specific process in which the units perform the foregoing corresponding steps is described in detail in the foregoing method embodiments. For brevity, details are not described herein.

FIG. 7 is a schematic diagram of an architecture of a communication apparatus applicable to an embodiment of this application.

The apparatus 700 includes a processor 710. The processor 710 is coupled to a memory 720. The memory 720 is configured to store a computer program or instructions and/or data. The processor 710 is configured to execute the computer program or the instructions stored in the memory 720, or read data stored in the memory 720, to perform the methods in the foregoing method embodiments. As shown in FIG. 7, the apparatus 700 further includes a transceiver 730, and the transceiver 730 is configured to receive and/or send a signal. For example, the processor 710 is configured to control the transceiver 730 to receive and/or send a signal.

Optionally, there are one or more processors 710.

Optionally, there are one or more memories 720.

Optionally, the memory 720 and the processor 710 are integrated together, or are disposed separately.

In a solution, the apparatus 700 is configured to implement the operations performed by the access network device and the UPF network element in the foregoing method embodiments.

For example, the processor 710 is configured to execute the computer program or the instructions stored in the memory 720, to implement related operations of the access network device in the foregoing method embodiments. For example, the method is performed by the access network device in embodiments shown in FIG. 3, FIG. 4A and FIG. 4B, and FIG. 5.

For another example, the processor 710 is configured to execute the computer program or the instructions stored in the memory 720, to implement related operations of the terminal device in the foregoing method embodiments. For example, the method performed by the UPF network element in embodiments shown in FIG. 3, FIG. 4A and FIG. 4B, and FIG. 5.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other suitable type of memory.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

This application further provides a system, including the first access network device, the second access network device, the access and mobility management function device, and the first session management function device.

All or some of the foregoing embodiments may be implemented via software, hardware, firmware, or any combination thereof. When the software is used to implement embodiments, all or a part of embodiments may be implemented in a form of a computer program product. The computer program product includes one or more computer instructions. When the computer instructions are loaded and executed on a computer, the procedure or functions according to embodiments of this application are entirely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

In embodiments of this application, words such as "example" or "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments via any appropriate manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and names may be different in an actual network. It should not be understood that names of various nodes and messages are limited in this application. By contrast, any name that has a same or similar function as a node or a message used in this application is considered as a method or an equivalent replacement of this application, and falls within the protection scope of this application.

It should be further understood that, in this application, "when" and "if' mean that UE or a base station performs corresponding processing in an objective situation, but do not constitute any limitation on time, do not require the UE or the base station to perform a determining action during implementation, and do not mean other limitations either.

It should be noted that, in embodiments of this application, "presetting", "preconfiguring", or the like may be implemented by prestoring corresponding code or a table in a device (for example, a terminal device), or in another manner that may indicate related information. A specific implementation of "presetting", "predefining", or the like is not limited in this application, for example, a preset rule or a preset constant in embodiments of this application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" indicates one or more. "A plurality of means two or more.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely used for distinguishing for ease of description, and are not used to limit the scope of embodiments of this application. For example, different indication information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, displayed or discussed mutual couplings or direct couplings or communication connections may be implemented through some interfaces. Indirect couplings or communication connections between the apparatuses or the units may be implemented in electrical, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
performing, by an access network device, congestion detection on a first data flow; and
sending, by the access network device, a first data packet to a user plane function based on a congestion detection result, wherein a tunneling protocol-user plane GTP-U header of the first data packet comprises congestion information, or sending, by the access network device, a second data packet to user equipment UE based on a congestion detection result, wherein a service data adaptation protocol SDAP layer of the second data packet comprises congestion information;
the congestion information is used by a server to adjust a rate for sending the first data flow.

2. The method according to claim 1, wherein the method further comprises:
receiving, by the access network device, a data flow identifier of the first data flow.

3. The method according to claim 2, wherein the performing, by an access network device, congestion detection on a first data flow comprises:
performing, by the access network device, congestion detection on the first data flow based on the data flow identifier.

4. The method according to claim 1 or 2, wherein the method further comprises:
receiving, by the access network device, a congestion identifier.

5. The method according to claim 4, wherein the performing, by an access network device, congestion detection on a first data flow comprises:
performing, by the access network device, congestion detection on the first data flow based on the data flow identifier and/or the congestion identifier.

6. The method according to any one of claims 1 to 5, wherein the congestion information comprises first congestion information and second congestion information, the first congestion information is congestion information between the access network device and the user plane function, and the second congestion information is congestion information between the access network device and the UE.

7. The method according to any one of claims 1 to 6, wherein the sending, by the access network device, a first data packet to a user plane function based on a congestion detection result, or the sending, by the access network device, a second data packet to user equipment UE based on a congestion detection result comprises:
determining, by the access network device, that the congestion detection result meets a first condition; and
sending, by the access network device, the first data packet to the user plane function, or sending, by the access network device, the second data packet to the UE.

8. The method according to claim 2, wherein the receiving, by the access network device, a data flow identifier of the first data flow comprises:
receiving, by the access network device, the first data packet from the user plane function, wherein the first data packet comprises the data flow identifier; or
receiving, by the access network device, congestion detection information from an SMF network element, wherein the congestion detection information comprises the data flow identifier.

9. The method according to claim 8, wherein the congestion detection information further comprises at least one of a queue delay, congestion reporting time, a packet loss rate, a buffer size, a periodicity, a congestion level, and a rate reduction proportion.

10. The method according to any one of claims 1 to 9, wherein the first data flow is a quality of service QoS flow that is in a protocol data unit PDU session and that is bound to a congestion detection policy and charging control PCC rule.

11. The method according to any one of claims 1 to 10, wherein the first data packet or the second data packet is a data packet used to transmit data of the data flow, or the first data packet or the second data packet is a monitoring data packet generated by the access network device or the user plane function.

12. The method according to any one of claims 1 to 11, wherein the congestion information comprises at least one of a queue delay proportion and a threshold delay proportion, a packet loss proportion, a buffer size proportion, a congestion level, and a rate reduction proportion.

13. The method according to any one of claims 1 to 11, wherein the first data packet is the same as the second data packet, or the first data packet is different from the second data packet.

14. A communication method, comprising:
receiving, by a user plane function, a first data packet from an access network device, wherein a tunneling protocol-user plane GTP-U header of the first data packet comprises first congestion information; and
sending, by the user plane function, second congestion information to a server based on the first congestion information, wherein the second congestion information is used by the server to adjust a rate for sending a first data flow.

15. The method according to claim 14, wherein the sending, by the user plane function, second congestion information to a server comprises:
sending, by the user plane function, a second data packet to the server, wherein the second data packet comprises the second congestion information.

16. The method according to claim 14 or 15, wherein the sending, by the user plane function, second congestion information to a server comprises:
sending, by the user plane function, the second congestion information to the server via user equipment UE.

17. The method according to claim 16, wherein the sending, by the user plane function, the second congestion information to the server via user equipment UE comprises:
sending, by the user plane function, a downlink data packet to the UE, wherein the downlink data packet comprises the second congestion information.

18. The method according to any one of claims 14 to 17, wherein the sending, by the user plane function, second congestion information to a server comprises:
sending, by the user plane function, the second congestion information to the server via a session management function or a network exposure function.

19. The method according to any one of claims 14 to 18, wherein the sending, by the user plane function, second congestion information to a server comprises:
determining, by the user plane function, that the first congestion information meets a first condition, or determining, by the user plane function based on the first congestion information, that a congestion detection result meets a first condition; and
sending, by the user plane function, the second congestion information to the server.

20. The method according to any one of claims 14 to 19, wherein the first data packet is a data packet that transmits data and that is of the data flow or a monitoring data packet generated by the access network device or the user plane function.

21. The method according to any one of claims 14 to 19, wherein the congestion information comprises at least one of a queue delay proportion and a threshold delay proportion, a packet loss proportion, a buffer size proportion, a congestion level, and a rate reduction proportion.

22. A communication apparatus, comprising:
a module or unit configured to implement the method according to any one of claims 1 to 21.

23. A communication system, comprising a module or unit for performing the communication method according to any one of claims 1 to 21, or comprising a communication apparatus for implementing the method according to any one of claims 1 to 21.

24. A communication apparatus, comprising:
a processor, configured to execute a computer program stored in a memory, so that the communication apparatus performs the communication method according to any one of claims 1 to 21.

25. A computer-readable storage medium, wherein the computer-readable storage medium stores a computer program; and when the computer program is run on a computer, the computer is enabled to perform the communication method according to any one of claims 1 to 21.

26. A computer program product, wherein the computer program product comprises instructions used to perform the communication method according to any one of claims 1 to 21.
